# EUROPEAN PATENT APPLICATION

(11) **EP 1 215 052 A2**
(43) Date of publication of application: **19.06.2002**
(21) Application number: 01114611.5
(22) Date of filing: 19.06.2001
(51) Int. Cl.: B60B 27/00

(54) **Wheel hub group with flange**

(30) Priority: 13.12.2000 IT TO000209 U
(71) Applicant: OMCAR S.n.c. di Marino G. & C., 10080 Busano (TO) (IT)
(72) Inventor: Marino, Gianfranco, 10080 Busano (TO) (IT)
(74) Representative: Lotti, Giorgio

(57) **Abstract**

Wheel hub group (1) with flange (2) presenting a hub (3) which is provided with an internal tubular housing (4) and a rolling contact bearing (5) which in its turn presents at least one row (9) of revolving bodies (19), an inner race (11) and, for said row (9), two sliding tracks (13) which are coaxial to each other; a first sliding track (13) of the said two sliding tracks (13) being obtained on the inner race (11), while a second sliding track (13) of the said two sliding tracks (13) is obtained on an outer race (12), which is an integral part of the rolling contact bearing (5) and is assembled inside the tubular housing (4).

## Description

The present invention relates to a wheel hub group with flange.

Usually, wheel hub groups with flanges comprise a hub, a tubular housing which is obtained inside the hub itself, and a rolling contact bearing which is an integral part of the hub and which, in its turn, comprises at least one row of revolving bodies, an inner race and, for each row, two sliding tracks which are coaxial to each other and which are obtained on the inner race and the tubular housing.

In the engineering industry in general and, above all, in the sector of the engineering industry that is especially concerned with the manufacture of spare parts, it is particularly burdensome to make use of the technology which is necessary to produce the above-described types of wheel hub groups, as the volumes of production are not sufficient to be able to write off the cost of the investment for such technology.

The aim of the present invention is that of producing a wheel hub group with flange, the manufacture of which will be both simple and cost-effective and which will also be able to support low volumes of production.

According to the present invention, a wheel hub group with flange will be realised comprising a hub, a tubular housing which is obtained inside the hub itself, and a rolling contact bearing which in its turn comprises a row of revolving bodies, an inner race and, for said row, two sliding tracks which are coaxial to each other; the group being characterised by the fact that a first sliding track of the said two sliding tracks is obtained on the said inner race, while a second sliding track of the said two sliding tracks is obtained on an outer race, which is an integral part of the rolling contact bearing and is assembled inside the said tubular housing.

The invention will now be described with reference to the attached drawings, which illustrate a non-limiting form of embodiment of the invention, in which:
FIGURE 1 illustrates, in diagram form, and with some parts in section and other parts removed for reasons of clarity, a preferred form of embodiment of a wheel hub group with flange according to the present invention; and
FIGURE 2 illustrates a detail of FIGURE 1 in a pre-assembly configuration.

The group 1 comprises a hub 3 which is coaxial to a longitudinal axis A, a tubular housing 4 which is obtained inside the hub 3 itself, and a rolling contact bearing 5 which is assembled inside the tubular housing 4 itself.

The tubular housing 4 is axially limited towards the outside of the hub 3 by an opening 6 which is transverse to the axis A, and is axially limited towards the inside of the hub 3 itself by two internal shoulders 7 and 8 which are axially arranged in series one after the other starting from the opening 6 itself. The shoulder 8 presents an internal diameter Φ₁ which is less than an internal diameter Φ₂ of the shoulder 7.

The rolling contact bearing 5 comprises at least two rows 9 of revolving bodies 10, an inner race 11 and an outer race 12, which are coaxial to each other and which are each provided with a sliding track 13 for each row 9 of revolving bodies 10. It should be especially noticed that the outer race 12 is provided with two respective sliding tracks 13a in its own radially internal part, and that it presents an external diameter Φ₃ which is substantially equal to in internal diameter Φ₄ of the tubular housing 4, and it is mounted with interference inside the tubular housing 4 itself. The inner race 11, on the other hand, is defined by two semi-races 11a and 11b which are separate from each other and which are each provided, from their own radially external parts, with a respective sliding track 13b which is coaxial to the relative sliding track 13a.

With the aim of making sure that the axial dimensions of the above-described wheel hub group are perfectly compatible with the axial dimensions of the pinion 14 on which it is to be assembled, the wheel hub group 1 comprises an annular spacer 15 which is arranged in a radially facing position to the shoulder 7 and which is in an axially intermediate position between the shoulder 8 and the inner race 11 of the rolling contact bearing 5. The spacer 15 presents an axial thickness which is less than an axial length of the shoulder 7, and an external diameter Φ₅ which is less than the diameter Φ₂.

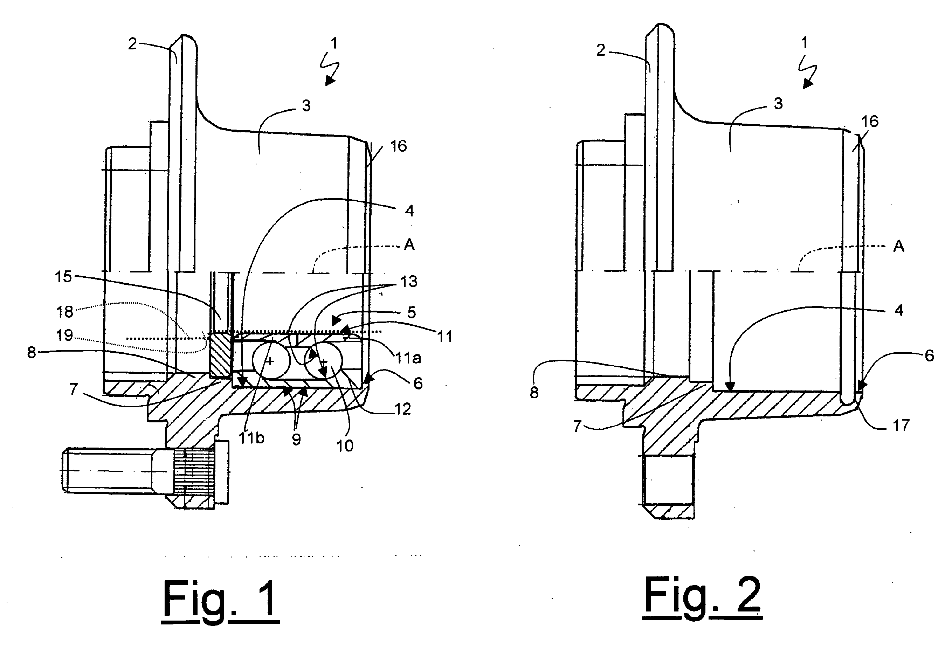

Finally, the hub 3 comprises an annular blocking section 16 which is arranged to correspond with the opening 6 of the hub 3 itself in order to close the outer race 12 against the shoulder 7. In particular, and in accordance with an illustration which is better described in FIGURE 2, the annular section 16 is defined by an edge 17 of the opening 6, which is riveted against the outer race 12 of the rolling contact bearing 5 once the rolling contact bearing 5 itself is inserted into the tubular housing 4.

The different radial and axial dimensions of the spacer 15 in relation to the shoulder 7 determine a radial clearance of the spacer 15 in relation to the shoulder 7 and an axial clearance of the spacer 15 itself in relation to the inner race 11 of the contact rolling bearing 5. The latter clearance, however, is recovered when the wheel hub group 1 is assembled on a pinion 18, a shoulder 19 which comes into contact with the spacer 15 closing in compact fashion the spacer 15 itself against the inner race 11, or, even better, against the semi-races 11a and 11b.

Should the conditions of assembly change, there will also be a change in the axial dimensions of the spacer 15, which will thus permit the wheel group hub 1 to be used on different kinds of vehicles.

Furthermore, the internal position of the spacer 15 guarantees easy transport of the wheel hub group 1, as well as an easy and rapid assembly of the wheel hub group 1 itself onto a relative pinion 18.

It is not intended that the present invention be limited to the form of embodiment herein described and illustrated, which is to be considered as an example of a form of embodiment of a the wheel hub group 1 with flange, which might instead be subject to further modifications in relation to the shape and arrangement of the parts, and details pertaining to construction and assembly.

## Claims

1. Wheel hub group (1) with flange (2) comprising a hub (3), a tubular housing (4) which is obtained inside the hub (3) itself, and a rolling contact bearing (5) which in its turn comprises a row (9) of revolving bodies (10), an inner race (11) and, for said row (9), two sliding tracks (13) which are coaxial to each other; the group (1) being **characterised by** the fact that a first sliding track (13) of the said two sliding tracks (13) is obtained on the said inner race (11), while a second sliding track (13) of the said two sliding tracks (13) is obtained on an outer race (12), which is an integral part of the rolling contact bearing (5) and is assembled inside the said tubular housing (4).

2. Wheel hub group according to Claim 1, **characterised by** the fact that it comprises a spacer (15) which is arranged in a radially facing position to a first shoulder (7) inside the hub and in an axially intermediate position between a second shoulder (8) inside the hub itself and the inner race (11) of the rolling contact bearing (5); the first shoulder (7) internally limits the said tubular housing (4), and the second shoulder (8) presents a internal diameter which is smaller than an internal diameter of the first shoulder (7).

3. Wheel hub group according to Claim 2, **characterised by** the fact that the spacer (15) is integral to the said inner race (11) and is free to rotate in relation to the outer race (12)

4. Wheel hub group according to Claim 3, **characterised by** the fact that the spacer (15) presents an axial thickness which is less than an axial length of the said first shoulder (7).

5. Wheel hub group according to Claims 2, 3 or 4, **characterised by** the fact that it comprises an annular blocking section (16) which is arranged to correspond with an open end (6) of the hub in order to close the outer race (12) against the said second shoulder (8); the open end (6) axially limits the said tubular housing (4) towards the outside.

6. Wheel hub group according to Claim 5, **characterised by** the fact that the annular blocking section (16) is a riveted section which is part of the said open end (6).
